# EUROPÄISCHE PATENTANMELDUNG

(11) **EP 2 189 859 A1**
(43) Veröffentlichungstag der Anmeldung: **26.05.2010**
(21) Anmeldenummer: 08020270.8
(22) Anmeldetag: 21.11.2008
(51) Int. Cl.: G05B 19/048

(54) **Energieerzeungsanlage mit mehreren Stromgeneratoren mit mehreren Umrichtern, z.B. PV- und/oder Windkraftanlagen**

(71) Anmelder: SMA Solar Technology AG, 34266 Niestetal (DE)
(72) Erfinder: Allert, Claus, 34260 Kaufungen (DE); Gonska, Maurice, 34117 Kassel (DE); Magnussen, Björn, 34131 Kassel (DE); Müller, Lothar Kurt, 34117 Kassel (DE); Tümmler, Jörn, 34317 Habichtswald (DE)
(74) Vertreter: Walther, Walther & Hinz GbR

(57) **Zusammenfassung**

Gegenstand der Erfindung ist eine Energieerzeugungsanlage mit mehreren Stromgeneratoren, z. B. PV- und/oder Windkraftanlagen, umfassend mehrere Umrichter (UR), wobei jeder Umrichter oder damit datentechnisch in Verbindung stehende Geräte eine Speichereinheit (SE) aufweist, wobei die Speichereinheit (SE) einerseits Messwerte die Leistung des Generators betreffend und/oder andererseits Zustandswerte sowohl über den Zustand des Umrichters und/oder über den Zustand des Generators und/oder Parameter, die die Funktionsweise des Gerätes festlegen erfasst, wobei diese Werte und Parameter nach einem bestimmten Ordnungsschema in der Speichereinheit hinterlegt sind, wobei die Mehrzahl an Umrichtern oder die damit in Verbindung stehenden Geräte mit mindestens einer Verarbeitungs- und Kommunikationseinheit (VKE) in Verbindung stehen, wobei die VKE als Rechnereinheit ausgebildet ist, wobei in die VKE ein Schlüsselcode direkt oder indirekt eingebbar oder fest hinterlegt ist, der mit dem Ordnungsschema in der SE korreliert, und der das Auslesen der Werte und Parameter aus der SE und die Anzeige der Werte und Parameter in der VKE bewirkt, wobei der Schlüsselcode ein oder mehrere Selektions- oder Subschlüssel (a, b, c, oder d) aufweist, durch die auf die in dem jeweiligen Umrichter oder Geräte hinterlegten Werte und Parameter zurückgegriffen wird.

## Beschreibung

Die vorliegende Erfindung betrifft eine Energieerzeugungsanlage mit mehreren Stromgeneratoren mit mehreren Umrichtern, z. B. PV- und/oder Windkraftanlagen sowie eine Verarbeitungs- und Kommunikationseinheit als Bestandteil einer Energieversorgungsanlage.

Energieerzeugungsanlagen mit mehreren Stromgeneratoren, z. B. in Form von PV- und/oder Windkraftanlagen oder auch zuschaltbaren Blockheizkraftwerken oder Wasserkraftwerken sind bekannt. Solche Energieerzeugungsanlagen mit mehreren unterschiedlichen Stromgeneratoren werden häufig durch einen gemeinsamen Leitstand betrieben. Die einzelnen Umrichter der jeweiligen Stromgeneratoren weisen hierbei nach dem Stand der Technik eine Speichereinheit (SE) auf, wobei in der Speichereinheit eine Vielzahl von Daten über den Betrieb sowohl des Umrichters, insbesondere eines Wechselrichters, aber auch des Stromgenerators selbst abgelegt sein können. Darüber hinaus ist auch bekannt, Parameter über die Funktionsweise des Gerätes zu speichern. All diese Werte, also Messwerte und Zustandswerte und auch Parameter müssen in einem Leitstand abrufbar sein. Dies kann zum einen der Kontrolle und Steuerung der Energieerzeugungsanlage als Ganzes dienen oder aber auch lediglich zu Informationszwecken. So soll aufgrund der Werte erkennbar sein, ob gegebenenfalls ein Wechselrichter oder ein PV-Modul ausgefallen ist, oder aber auch, um sich lediglich darüber zu informieren, welche Leistung gerade erzeugt wird.

Bislang ist es so, dass die Daten der einzelnen Umrichter, also insbesondere der Wechselrichter von PV-Modulen, einzeln abgefragt werden. Das heißt, dass beispielsweise zur Ermittlung der momentanen Leistung sämtlicher Stromgeneratoren eine Vielzahl von Daten übertragen werden muss, was nicht nur zu einer großen Unübersichtlichkeit der übermittelten Daten führt, sondern, was viel wesentlicher ist, die Übertragungsgeschwindigkeit dieser Vielzahl an Daten deutlich reduziert ist.

Wie bereits an anderer Stelle erläutert, hat es sich nun herausgestellt, dass es nicht erforderlich ist, dass sämtliche Daten, also Werte und Parameter, die im Speicher eines Umrichters gespeichert sind, abgerufen werden müssen. Es hat sich vielmehr herausgestellt, dass für unterschiedliche Zwecke unterschiedliche Werte und Parameter abrufbar sein müssen, da beispielsweise ein Techniker zur Überprüfung der Anlage durchaus an anderen Werten und Parametern interessiert ist, als beispielsweise der Betreiber der Anlage, den möglicherweise lediglich die momentane Leistung der Anlage oder deren Energieertrag insgesamt interessiert.

Um eine bedarfsgerechte Abfrage von Werten und Parametern zu ermöglichen, wird bei einer Energieerzeugungsanlage mit mehreren Stromgeneratoren, z. B. PV- und/oder Windkraftanlagen mit mehreren Umrichtern, wobei jeder Umrichter oder damit datentechnisch in Verbindung stehende Geräte eine Speichereinheit SE aufweisen, wobei die Speichereinheit einerseits Messwerte die Leistung des Generators betreffend und/oder andererseits Zustandswerte sowohl über den Zustand des Umrichters als auch über den Zustand des Generators und/oder Parameter, die die Funktionsweise des Gerätes festlegen erfasst, vorgeschlagen, dass diese Werte und Parameter nach einem bestimmten Ordnungsschema in der Speichereinheit hinterlegt sind, wobei die Mehrzahl an Umrichtern oder die damit datentechnisch in Verbindung stehenden Geräte mit mindestens einer Verarbeitungs- und Kommunikationseinheit (VKE) in Verbindung stehen, wobei die VKE als Computer (beispielsweise als PC) ausgebildet ist, wobei in die VKE ein Schlüsselcode eingebbar oder fest hinterlegt ist, der mit dem Ordnungsschema in der SE der Umrichter korreliert, und der das Auslesen der Werte und Parameter aus der SE und die Anzeige der Werte und Parameter in der VKE bewirkt, wobei der Schlüsselcode ein oder mehrere Selektions- oder Subschlüssel aufweist, durch die auf die in dem jeweiligen Umrichter oder dem jeweiligen Gerät hinterlegten Werte und Parameter zurückgegriffen wird.

In einer besonderen Ausgestaltung ist vorgesehen, dass der Schlüsselcode ein oder mehrere Stellen aufweist, wobei die ein oder mehreren Stellen des Schlüsselcodes durch ein oder mehrere Selektions- oder Subschlüssel belegt sind.

Vorteilhaft sind mindestens zwei Selektionsschlüssel, besonders vorteilhaft jedoch vier Selektionsschlüssel Teil des Schlüsselcodes . Es hat sich gezeigt, dass insbesondere bei der Verwendung von vier Selektionsschlüsseln die häufigsten Informationsfälle abgedeckt werden. Die Aufgabe der VKE kann allerdings auch in der Überwachung, Speicherung und Auswertung von Informationen bestehen. Auch in diesem Fall kann die VKE durch die dargestellte Erfindung eine besonders schnelle und effiziente Beschaffung der Informationen erreichen.

Im Übrigen kann die VKE eine oder mehrere Aufgaben haben, wobei sich aus den Aufgaben bestimmte Schlüsselcodes ergeben. Beispielhaft ist hier vorstellbar, dass bei Unterschreitung einer bestimmten Leistung eine Warnung abgeben wird. Hierfür sind Angaben über die Leistung erforderlich. Das heißt, durch den fest hinterlegten Schlüssel werden die relevanten Leistungsdaten aus den Speichereinheiten ausgelesen, in der VKE verarbeitet und bei Erreichen eines bestimmten Wertes erfolgt z. B. eine Warnung.

Hieraus wird deutlich, dass durch die Eingabe eines Schlüsselcodes mit einer Mehrzahl von Stellen, wobei die einzelnen Stellen mit Selektions- oder Subschlüsseln belegbar sind, selektiv Werte aus der Vielzahl der angebotenen Werte herausgefiltert werden können, die dann durch die VKE angezeigt werden. Vorteilhaft hierbei ist insbesondere, dass dadurch, dass der Schlüsselcode mit dem Ordnungsschema der Speichereinheit des jeweiligen Umrichters korreliert, auch im Nachhinein an die Energieerzeugungsanlage eine beliebige Anzahl weiterer Stromgeneratoren mit z. B. entsprechenden Wechselrichtern angeschlossen werden können, da über die Identität des Schlüsselcodes mit den Selektions- oder Subschlüsseln mit den nach dem selben Ordnungsschema in der Speichereinheit hinterlegten Daten die Aufnahme neuer Stromgeneratoren, beispielsweise PV- und/oder Windkraftanlagen, in die Überwachung möglich ist. So ist es beispielsweise möglich, bei einer Energieerzeugungsanlage mit mehreren PV-Modulen und der entsprechenden Anzahl von Wechselrichtern, sowie weiteren Windkraftanlagen mit Umrichtern, lediglich die Leistung der PV-Module an den Wechselrichtern DC-seitig zu ermitteln. Das heißt, es besteht die Möglichkeit, selektiv über die einzelnen Selektions- oder Subschlüssel im Schlüsselcode die unterschiedlichsten Daten, und nur diese Daten, zur Anzeige zu bringen.

Die Abfrage von Daten der Anlage kann erfindungsgemäß auch ganz oder teilweise über die Erzeugung von Schlüsseln und Bildung von Schlüsselcodes und Schlüsselcodebereichen in einer VKE erfolgen. Die VKE kann hierbei quasi automatisch Schlüssel jeweils passend zur Lösung der ihr gestellten Aufgabe bilden. Diese Aufgabe kann z. B. in der aktuellen Anzeige von Informationen an einen Benutzer bestehen. Dieser kann sein lnformationsbedürfnis entweder direkt beschreiben, indem er z. B. einen Schlüsselcode eingibt oder auf einer grafischen Benutzeroberfläche die für ihn interessanten Themengebiete anklickt, oder er kann das Informationsbedürfnis indirekt beschreiben, indem sich durch seine Handlungen oder durch die Betriebssituation der Anlage oder weitere Informationen durch die VKE selbst ermitteln lässt, welche Informationen in der VKE benötigt werden und daraus ein Schlüsselcode oder Schlüsselcodebereich durch einen in der VKE hinterlegten Algorithmus generiert wird. Das heißt, das System kann in einem bestimmten Umfang selbstständig lernfähig sein.

Bei nur relativ gesehen wenigen Umrichtern einer Anlage, also z. B. den Wechselrichtern einer PV-Anlage, besteht darüber hinaus die Möglichkeit, die SE eines Wechselrichters als VKE auszubilden. Das heißt, die SE besitzt eine Rechnereinheit und eine Anzeige und fungiert insofern als Mastereinheit, der die übrigen Wechselrichter untergeordnet sind.

Weitere vorteilhafte Merkmale ergeben sich aus den Unteransprüchen.

So ist insbesondere nach einem besonders vorteilhaften Merkmal vorgesehen, dass eine oder mehrere Stellen des Schlüsselcodes mit einem offenen Schlüssel belegt sind. Unter einem offenen Selektions- oder Subschlüssel wird ein solcher verstanden, der keine oder eine reduzierte Filterwirkung ausübt. Hieraus ergibt sich Folgendes:
Wie bereits an anderer Stelle erläutert, korreliert der Schlüsselcode mit dem Ordnungsschema in der SE des jeweiligen Umrichters. Das bedeutet, dass die Stellen des Schlüsselcodes, also die Stellen, an denen ein Selektions- oder Subschlüssel eingebbar ist, unmittelbar mit dem Ordnungsschema in der SE korrelieren. Das bedeutet, dass wenn beispielsweise eine Stelle des Schlüsselcodes einen definierten Platz aufweist, der der Aufnahme des Selektionsschlüssels betreffend die Art des Stromgenerators dient, so kann dann, wenn dieser Platz nicht mit dem Selektions- oder Subschlüssel belegt ist, sondern mit dem offenen Schlüssel, nicht mehr selektiert werden, dass beispielsweise lediglich die Daten der PV-Generatoren ermittelt werden, sondern es werden dann die Daten aller Stromgeneratoren ermittelt, also beispielsweise sowohl der PVals auch der Windkraftanlagen. Das heißt, durch den sogenannten offenen Schlüssel findet eine Selektion im Rahmen der durch die Stelle im Schlüsselcode angegebenen oder spezifizierten Gruppe nicht statt. Das bedeutet, dass im Extremfall dann, wenn der Schlüsselcode auf seinen gesamten Stellen mit jeweils einem offenen Schlüssel belegt wird, alle Werte der betreffenden Schlüsselgruppe angezeigt bzw. übertragen werden.

In der Realisierung sind verschiedene technische Alternativen denkbar. So kann ein Selektions- oder Subschlüssel einen Wert annehmen, der ihn als offen kennzeichnet und die Filterwirkung dieses Schlüssels komplett aufhebt. Weiterhin sind Werte für eine teilweise Aufhebung der Filterwirkung denkbar, im Sinne eines teiloffenen Schlüssels mit reduzierter Filterwirkung. Weiterhin ist die Angabe eines Bereiches denkbar, in dem die zu filternden Schlüssel liegen oder nicht liegen sollen. Weitere Filtermöglichkeiten entstehen über Bitmasken oder Listen von Werten oder Intervallen oder algorithmischen Filterbeschreibungen.

In einer besonders vorteilhaften Variante kann die bitweise Verkettung der Subschlüsselcodierungen zu einer längeren Bitsequenz als binäre Zahl interpretiert werden. Für diese Zahl ist dann durch einen "von" - "bis" Mechanismus ein Bereich angebbar. Über die Angabe dieses Bereiches im Gesamtschlüssel lässt sich die Filterwirkung für jeden Subschlüssel aufheben, wenn die Filterwirkung der in die niederwertigeren Bits des Gesamtschlüssels codierten Subschlüssel ebenfalls aufgehoben wird. Diese Implementierung bietet überraschend große Vorteile für die Implementierung der Datenspeicherung und Verarbeitung.

Dies gilt insbesondere dann, wenn Abfragen einer VKE in ressourcenbegrenzten SE (wenig Speicher, wenig verfügbare Rechenkapazitäten) erfolgen sollen. In diesem Fall der Verwendung von teilweise offenen Schlüsseln wird der aus mehreren Subschlüsseln bestehende Abfrageschlüssel als linearer numerischer Wert verwendet. Das bedeutet, dass die schon beschriebene separate Auswertung der Subschlüssel a bis d als einzelne "von" - "bis" Bereiche ersetzt wird durch einen einzigen "von" - "bis" Bereich in dem Schlüssel. Vorteilhaft hierbei ist, dass die Zusammenstellung der Antworten in den SE keine zusätzlichen Ressourcen erfordert, da die angeforderten Messwert- und/oder Parameterbereiche schon in der gewünschten Anforderung abgelegt und verfügbar sind, d. h. das Ordnungsschema des Abfrageschlüssels entspricht der Anordnung der zu übertragenden Daten in der SE.
Bislang wurde dargestellt, wie die einzelnen Werte und Parameter von der oder den VKEs abgerufen werden können. Es besteht allerdings die Möglichkeit, über den gleichen Weg auch Parameter an den Umrichtern zu ändern bzw. einzustellen. Das heißt, über den Schlüsselcode werden Informationen übermittelt, die eine Änderung einzelner Parameter bewirken.

Nach einem besonderen weiteren Merkmal der Erfindung ist vorgesehen, dass die mehreren VKEs untereinander verbunden sind. Hieraus wird folgendes erkennbar:

Bereits zuvor ist erwähnt worden, dass z. B. mehrere Wechselrichter mit einer VKE verbunden sind. Ist allerdings eine Vielzahl von Wechselrichtern oder Umrichtern vorhanden, so ist das Datenvolumen zur Verarbeitung durch eine einzige VKE wesentlich zu groß. Insofern sind mehrere VKEs vorgesehen, wobei nach einem weiteren Merkmal der Erfindung insbesondere die mehreren VKEs kaskadiert miteinander in Verbindung stehen. Das bedeutet, dass die VKEs nach einer Baumstruktur miteinander verbunden sind. Insbesondere sind hierbei die mehreren Umrichter zu Gruppen zusammengefasst, wobei jeder Gruppe auf einer ersten Kaskade eine VKE zugeordnet ist, wobei die VKEs mehrerer Gruppen in mindestens einer nächsten Kaskade mit mindestens einem übergeordneten VKE in Verbindung stehen. Eine solche Baumstruktur ermöglicht, dass durch die VKEs in einer jeden Kaskade die Messwerte oder Parameter entsprechend dem Selektions- oder Subschlüssel und/oder dem offenen Schlüssel zusammengefasst werden und durch vorgegebene Algorithmen, z. B. durch Mittelwertbildung, in den VKEs zu Anzeigewerten verarbeitet werden, die auf der VKE der höchsten Kaskade angezeigt werden. Durch diese Selektion von Daten und deren Zusammenführung wird erreicht, dass in der Baumstruktur der VKEs die Datenmengen, die von einer Kaskade in die nächste Kaskade überführt werden, relativ gering gehalten werden können. Dies deshalb, weil auf jeder Kaskade eine Fusionierung bzw. Zusammenfassung der entsprechend dem Schlüsselcode vorgegebenen Selektions- oder Subschlüssel oder offenen Schlüssel hinterlegten Werte und Parameter erfolgt. Das heißt, auf jeder Ebene einer Kaskade erfolgt eine Fusion der Daten, so dass die Datenmenge von einer Kaskade zur nächsten Kaskade im Wesentlichen nur von der Anzahl der VKE der jeweiligen Kaskade bestimmt wird und immer gleich bleibt. Die Übertragungsgeschwindigkeit ist somit verglichen mit der Übertragung einer Vielzahl von Daten, bei der eine solche Fusionierung nicht vorgenommen ist, extrem schnell. Die Übertragung der Daten erfolgt hierbei in Form von sogenannten (Daten-)Telegrammen, wobei die Möglichkeit besteht, den Inhalt einzelner Telegramme in einem Datentelegramm zusammenzufassen.

Durch die Fusionierung leidet der Informationsgehalt insbesondere für den Endanwender nicht; im Gegenteil kann durch eine sinnvolle Aufbereitung durch die Fusionierung der Werte und Parameter auf das Wesentliche und damit das Wichtige reduziert werden; dies geschieht u. a. dadurch, dass einzelne Messwerte und Parameter nach ihrer Wichtigkeit klassifiziert werden.

In besonders vorteilhafter Ausführung beinhaltet die Fusionierung einen oder mehrere der folgenden Algorithmen: Minimumbildung, Maximumbildung, Summenbildung, Mittelwertbildung, Summierung des Gewichtes des Wertes für die Mittelwertbildung typischerweise als Anzahl der Geräte oder Leistung, Zählung der Häufigkeit des Auftretens von Status der Einstellungen. In vorteilhafter Ausgestaltung der Erfindung wird bei einstellbaren Werten auch der Einstellbereich übertragen. Dieser wird in eine oder mehrerer der folgenden Werte fusioniert: maximal einstellbare Obergrenze, minimal einstellbare Obergrenze sowie Minimum und Maximum für die Untergrenze und für den aktuell eingestellten Wert. Damit lässt sich auch bei großen Anlagen schnell eine Übersicht über die gegebenenfalls unterschiedlichen Einstellungen und auch einstellbaren Parameterwerte erhalten.

Nach einem weiteren Merkmal der Erfindung kann vor dem eigentlichen Vorgang der Fusionierung eine Normierung der Messwerte oder Parameter erforderlich sein. Dies ist immer dann der Fall, wenn z. B. Wechselrichter unterschiedlicher Leistungsklassen in einer Anlage zum Einsatz gelangen. Die Wechselrichter mögen jeweils eine bestimmte Leistung erbringen, die in ihren absoluten Werten unterschiedlich ist, in Bezug auf den jeweils maximalen Leistungsgrad jedoch vergleichbar. Das heißt, leistet der eine Wechselrichter beispielsweise 1000 W, der andere Wechselrichter aufgrund seiner zu dem ersten Wechselrichter unterschiedlichen Leistungsklasse jedoch 15000 W, beide Wechselrichter arbeiten jedoch zu 99 % an der Leistungsgrenze, dann findet eine Normierung auf Prozentangaben statt, da ansonsten keine sinnvolle Fusionierung stattfinden könnte, wenn man wissen will, wie nahe die Anlage an ihrer Leistungsgrenze arbeitet.

Anhand von Beispielen soll die Erfindung nachstehend beispielhaft näher erläutert werden.
- Figur 1: zeigt den grundsätzlichen Aufbau einer Anlagentopologie in kaskadierter Form;
- Figur 2: zeigt eine Anlagentopologie eines ersten Beispiels gemäß Figur 1, wobei für die Fusionierung in der ersten Stufe die Anzahl der Werte oder Telegramme erkennbar ist;
- Figur 3: zeigt eine Anlagentopologie gemäß Figur 2 mit der ersten Stufe der Fusionierung;
- Figur 4: zeigt ein weiteres Beispiel gemäß Figur 2;
- Figur 5: zeigt die Fusionierung der ersten Stufe gemäß Figur 4.

Die im Beispiel genannten Schlüssel, Messwerte und weitere ausprägungsbedingte Festlegungen sind zur Erleichterung des Verständnisses in ihrem Umfang reduziert und stellen keine Einschränkung für den Schutzumfang dar.

### a.) Wichtigkeit des Wertes (3 Bit, max. 8 Möglichkeiten)

Es wird zunächst davon ausgegangen, dass die einzelnen Parameter und Messwerte unterschiedlich gewichtet werden. So gibt es Werte, deren Wichtung hoch, weitere Werte, deren Wichtung mittel und weitere Werte, deren Wichtung gering in Bezug auf ihre Wertigkeit, d. h. insbesondere in Bezug auf ihre Aussagekraft und ihre Abfragehäufigkeit ist. Die Festlegung dieser Werte bezüglich ihres Levels wird demzufolge vorgegeben. Wesentlich hierbei ist, dass die einzelnen Werte der unterschiedlichen Level alternativ zueinander stehen, d. h. nur dann, wenn der jedem Level zugeordnete Schlüssel angegeben wird, werden alle Werte ausgeworfen. Das heißt, die Summe der Werte aller drei Schlüssel ergibt die Ausgabe sämtlicher Werte.
- 1: High-Level, wenige Werte
- 2: Mittel: ca. 3/4 der Werte
- 3: Alle restlichen Werte

Die Gesamtheit aller Werte (Parameter und Messwerte) eines Systems würde durch die Summe (1) + (2) + (3) beschrieben

### b.) funktionale Gruppierung (5 Bit, max. 32 Möglichkeiten):

Jedes Gerät einer Gesamtanlage unterstützt mindestens eine dieser Funktionsgruppen:
- 1: Gerätestatus (Stat)
- 2: Gerät (Dev)
- 3: DC-Seite (DC)
- 4: Netzwerte (Grid)
- 5: Meteorologie (Met)
- 6: GridGuard (GG, Parametrierung länderspezifischer Einspeiserichtlinien)
- 7: Diebstahlschutz (TP)
- 8: Speichermedien (Stor)
- 9: Generator (Gen)
- 10: Batterie (Batt)
- 11: Grenzwertobjekte (Lim)
- 12: Entkupplungsschutz (Coup)
[13-32 Reserve]

Die vorgenannten 12 Gruppierungen, die nur beispielhaft in ihrer Auflistung erfolgen, stellen sich zum Teil als Parameter, zum Teil als Messwerte, zum Teil allerdings auch als Parameter und Messwerte dar. Messwerte sind hierbei solche, die ausschließlich lesbar sind, Parameter sind solche Werte, die lesbar und schreibbar sind, d. h. über die auch die Einstellungen geändert werden können. In diesem Zusammenhang sind beispielsweise folgende Werte der DC-Seite, also z. B. Spannung und Strom, Werte der Meteorologie, wie z. B. Einstrahlung, Umgebungstemperatur, Windrichtung, Messwerte. Im Einzelnen wird unter Gerätestatus beispielsweise zu verstehen sein, ob das Gerät funktionsfähig ist oder nicht; unter den Parametern, die unter 2 einem Gerät zuzuordnen sind, versteht man beispielsweise Skalierungen, Abschaltgrenzen, Regelparameter. Unter Speicher hat man zu verstehen, ob das Gerät mit einer Speicherausrüstung versehen ist und demzufolge in der Lage ist, Daten zu speichern bzw. wie voll der Speicher ist. Der Begriff "Grenzwertobjekt" beschreibt ein Datenobjekt, welches die Information darüber transportiert, wie nah ein Gerät an einer Grenze seiner Funktionsfähigkeit operiert. So werden z. B. vom Energieversorger Grenzen für die Netzspannung festgelegt. Stellt das Gerät fest, dass diese Grenzen erreicht oder überschritten sind, so muss es den Betrieb einstellen. Ähnliches gilt für physikalische Grenzen des Gerätes, wie z. B. die maximal abgebbare Leistung. Ist diese erreicht, kann die Leistung des Generators gegebenenfalls nicht mehr vollständig umgewandelt werden. Oder beispielsweise die maximale Spannung am DC-Eingang. Wird diese überschritten, so kann das Gerät Schaden nehmen.

In vorteilhafter Ausgestaltung werden die Grenzwertobjekte so festgelegt, dass sie bei Erreichen einer oberen Grenze den Wert +100 % annehmen und/oder bei Erreichen einer unteren Grenze den Wert -100 % annehmen.

In einer vorteilhaften Variante nehmen die Grenzwertobjekte Werte an, die den prozentualen Wert des jeweiligen Messwertes auf seine kritische Grenze darstellen. Eine Eingangsspannung von ½ des zulässigen Maximums würde also als Grenzwertobjekt 50 % ergeben.

In einer alternativen Variante werden einige Werte so skaliert, dass der Prozentwert dem Nutzer den gefühlten Abstand zu einer Problemsituation vermittelt.
-50 % - +50 % = alles OK
50 % - 90 % = Anlage belastet
90 % - 99 % (auch -) = Anlage bald kritisch
100 % = Anlagenbetrieb kritisch
100 % - 200 % = Anlage hat Betrieb eingeschränkt/eingestellt, da ein Parameter über dem zulässigen Bereich ist.

Grenzwertobjekte weisen den Vorteil auf, dass Informationen verschiedener Geräte zusammengefasst werden können, die vorher nicht sinnvoll zusammengefasst waren. So ist z. B. die zulässige DC-Spannung am Eingang geräteabhängig. Fasst man die DC-Spannung nach den Regeln Min, Max, Mittelwert zusammen, so ergibt sich bei unterschiedlichen Geräten, die z. B. auch unterschiedlich strukturierte Generatoren aufweisen können, keine für den Nutzer sinnvoll zu interpretierende Information. Überraschenderweise ist dies bei einer Formulierung der DC-Spannung als Grenzwertobjekt, also durch eine "Normierung" nicht der Fall, so dass der Nutzer schnell einen guten Überblick über den Abstand seiner Anlage zu Problemsituationen einschätzen kann, wobei die Grenzwertobjekte nur nach den bereits vorgestellten Fusionierungsregeln Min, Max und Mittelwert fusioniert werden müssen. Auch hier kann eine Normierung der Werte, wie zuvor beschrieben, erforderlich sein.

### c.) laufende Nummer des Wertes (8 Bit, max. 256 Möglichkeiten):

Jeder Messwert oder Parameter aus b.) einer Gruppe erhält eine laufende Nummer zur eindeutigen Indizierung des Messwertes oder Parameters innerhalb dieser Gruppe. Das heißt, sämtliche Messwerte oder Parameter einer Gruppe haben auf allen Geräten die identische Nummer, also z. B. ist der Strom der Netzseite eines jeden Geräts mit der gleichen Nummer belegt. Die Differenzierung, z. B. hinsichtlich Wind oder PV, erfolgt durch (d), die Geräteklasse.

Das heißt, unter (c) stellt sich als laufende Nummer eine fortlaufende Nummerierung der Werte und Parameter dar, die unter (a) der Klassifizierung High Level, Mediumlevel und Low Level zugeordnet sind. Das heißt, die funktionalen Gruppierungen unter (b) und die Geräteklasse sind somit einerseits gekennzeichnet durch den Subschlüssel (a) und andererseits gekennzeichnet durch eine fortlaufende Zuordnung von Nummern (c). Hieraus wird unmittelbar deutlich, dass über der Frage der Wichtigkeit des Wertes die fortlaufende Nummer in Bezug auf die funktionale Gruppierung und die jeweilige Geräteklasse die einzelnen Werte durch einen entsprechenden Schlüsselcode angesprochen werden können.

Jeder Parameter einer Gruppe (b) erhält eine laufende Nummer zur eindeutigen Indizierung innerhalb dieser Gruppe.

### d.) Geräteklasse (8 Bit, max. 256 Möglichkeiten)

Jedes Gerät gehört nur einer Geräteklasse an:
- 1: PV (Solarwechselrichter)
- 2: Wind (Windenergieanlagen-Wechselrichter)
- 3: Wasser (Wasserkraftwerks-Wechselrichter)
- 4: Blockheizkraftwerk
- 5: Brennstoffzelle (erzeugt Strom aus Wasserstoffspeicher)
- 6: Generatoren (rotierende Energieerzeuger, z.B. Dieselaggregate)
- 7: Batterie (Batterieladegeräte, aber auch Batterieumrichter)
- 8: Elektrolyseur (Wasserstofferzeuger)
- 9: SmartLoad (gesteuerte Verbraucher)
- 10: sonstige Verbraucher
- 11: Solar-Tracker-Systeme (Solarpanel-Nachführsysteme)
- 12: Kommunikationsgeräte / Gateways

Die Geräteklasse kann in drei Arten von Geräten eingeteilt werden, und zwar zum einen Energieerzeuger, Energieverbraucher und sogenannte Geräte, die mit solchen Energieerzeugern und -verbrauchern datentechnisch in Verbindung stehen. Ein einigendes Merkmal der Energieverbraucher und Energieerzeuger ist, dass diese jeweils einen Umrichter, beispielsweise in Form eines Wechselrichters aufweisen. Hierbei können folgende Energieerzeuger in einer Energieerzeugungsanlage vorhanden sein:
- 1.: PV
- 2.: Wind
- 3.: Wasser
- 4.: Blockheizkraftwerk
- 5.: Brennstoffzelle
- 6.: Generatoren (Gleichstrom, Drehstrom, Wechselstrom)
- 7.: Batterie

Diese Energieerzeuger verfügen zumindest über einen Umrichter, meistens über einen sogenannten Wechselrichter, wenn Gleichstrom erzeugt und in ein Wechselspannungsnetz eingespeist werden soll.

Darüber hinaus gibt es Verbraucher, z. B. sogenannte Elektrolyseure. Unter einem Elektrolyseur versteht man eine Anlage zur Wasserstofferzeugung mittels elektrischer Energie (Elektrolyse). Darüber hinaus gibt es allerdings auch sogenannte Solartrackersysteme (dem Sonnenstand nachgeführte Solarpanels), und insgesamt Kommunikationsgeräte/Gateways, die mit den einzelnen Energieerzeugern oder Verbrauchern in datentechnischer Verbindung stehen, wie dies bereits an anderer Stelle erläutert wurde. Auch diese Geräte sollen mit den gleichen datentechnischen Mechanismen abgefragt werden können.

Der Abfrageschlüssel ist aus diesen vier Teilen zusammengesetzt:
"abcd"

Ein Abfragegerät kann nun für jeden Subschlüssel einen "von bis" Bereich für die Abfrage erzeugen.
a: von 0 bis 7 (3 Bit)
b: von 0 bis 31 (5 Bit)
c: von 0 bis 255 (8 Bit)
d: von 0 bis 255 (8 Bit)

Die Abfrage wird ohne spezielle Geräteadresse(n) als sog. "Broadcast" (alle Geräte sind adressiert) in das Kommunikationsnetzwerk gesendet.
Alle Geräte, die empfangsbereit sind, werten diesen Anfrage- oder Selektionsschlüssel aus. Alle Messwerte und Parameter in den Geräten haben die Subschlüssel "a", "b" und "c" als Attribute lokal hinterlegt. Der Subschlüssel "d" ergibt sich aus der Geräteart.

Passt nun der angefragte Schlüssel auf einen oder mehrere der lokal verfügbaren Messwerte oder Parameter, so wird die Anfrage von dem betreffenden Gerät bedient.
- Lese-Anfrage: der/die gewünschten Wert(e) werden vom Gerät an den Anfrager (z. B. VKE) geschickt;
- Schreib-Anfrage: der/die übertragenen Wert(e) werden vom Gerät ausgewertet (z. B. als veränderter Parameter übernommen).

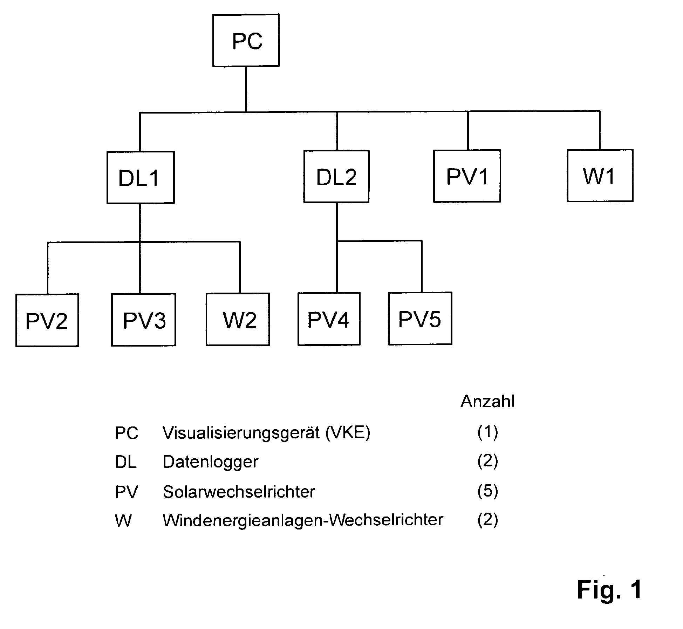

In Fig. 1 findet sich ein Beispiel für eine denkbare Anlagentopologie in kaskadierter Form:

### Messwerttabelle:

Prinzipieller Aufbau der Messwerte in PV-Geräten für die Selektions- oder Subschlüssel (b) und (c):
- Leere Felder bedeuten, dass der Messwert auf dem Gerät nicht vorhanden ist.
- **: Wichtigkeit 1, *: Wichtigkeit 2, ohne *: Wichtigkeit 3 (= Level 1, 2, 3 = Subschlüssel a)

| b→ | 1 | 2 | 3 | 4 | 5 | 6 | 7 | 8 | 9 | 10 | 11 |
|---|---|---|---|---|---|---|---|---|---|---|---|
| c↓ | Stat | Dev | DC | Grid | Met. | GG | TP | Stor | Gen | Batt | Lim |
| 1 | Health ** | R_{Iso} | P_{DC} ** | Energie** | | | | SD | | | |
| 2 | Event ** | h_{Gesamt} | U_{DC} * | P_{AC} ** | | | | | | | |
| 3 | | h_{Grid} | I_{DC} * | U_{AC} | | | | | | | |
| 4 | | Temp | U_{DCmax} * | I_{AC} | | | | | | | |
| 5 | | t_{Fan} | | Freq | | | | | | | |
| 6 | | | | Q_{AC} | | | | | | | |

Prinzipieller Aufbau der Messwerte in W-Geräten für die Sub-Schlüssel (b) und (c):

| b→ | 1 | 2 | 3 | 4 | 5 | 6 | 7 | 8 | 9 | 10 | 11 |
|---|---|---|---|---|---|---|---|---|---|---|---|
| c↓ | Stat | Dev | DC | Grid | Met. | GG | TP | Stor | Gen | Batt | Lim |
| 1 | Health ** | | P_{DC} ** | Energie ** | | | | | | | |
| 2 | Event ** | h_{Gesamt} | U_{DC} * | P_{AC} ** | | | | | | | |
| 3 | | h_{Grid} | I_{DC} * | U_{AC} | | | | | | | |
| 4 | | Temp | U_{DCmax} * | I_{AC} | | | | | | | |
| 5 | | | | Freq | | | | | | | |

### Beispiel 1:

Das Visualisierungsgerät z. B. ein PC als VKE möchte aus der Anlage nur
- P-DC
- P-AC
- Energiezähler
von PV, Wind (W) oder Wasserkraftgeräten (WK) geliefert bekommen. Es wird also wie folgt ein Abfrageschlüssel generiert:
- Gerät vom Typ PV, Wind oder Wasser (d)
- Index von 1..4 (c)
- Gruppe (b) DC-Seite oder Netzseite (AC)
- Nur High-Level Werte (a)

In Bezug auf (c) gilt, dass dieser Selektionsschlüssel so angegeben werden muss, das er mindestens die Werte umfasst, die angezeigt werden sollen. Minimal müsste (c) von 1 - 2 laufen. Eine Grenze nach oben besteht nicht, da nur das angezeigt wird, was unter (b) mit dem entsprechenden Level unter (a) gekennzeichnet ist.

### Abfrageschlüssel

| a | | b | | c | | d | |
|---|---|---|---|---|---|---|---|
| Von | Bis | von | bis | von | bis | von | bis |
| 1 | 1 | 3 | 4 | 1 | 4 | 1 | 3 |

Im System befinden sich nur WK, PV und W als Geräteklassen.

WK: würde sich durch den Subschlüssel (d) angesprochen fühlen, antwortet aber nicht, da Geräte vom Typ "Wasser" (WK) in diesem System nicht vorhanden sind und demzufolge auch keine Antwort generieren können und daher nicht antworten.

PV (Photovoltaik): alle PV (1..5) fühlen sich durch den Subschlüssel (d) angesprochen
- hat die Werte, P-DC, P-AC und Energiezähler mit Wichtigkeit (a) =1 vorliegen.

W (Wind): Alle W (1 und 2) fühlen sich durch den Subschlüssel (d) angesprochen
- hat die Werte P-DC, P-AC und Energiezähler mit Wichtigkeit (a) =1 vorliegen.

Alle PV und W Geräte antworten mit jeweils drei Antworttelegrammen (je eins für P-DC, P-AC und Energiezähler) auf die Anfrage. Jedes Antworttelegramm beinhaltet neben dem jeweiligen Messwert unter anderem auch den zugehörigen eindeutigen Schlüssel aus c) und b) und die Geräteadresse.

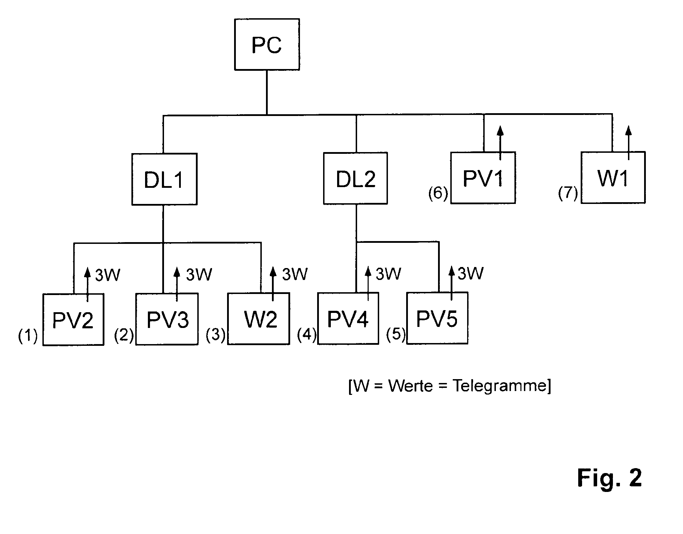

### Fusionierungsvorgang: (siehe Figur 2)

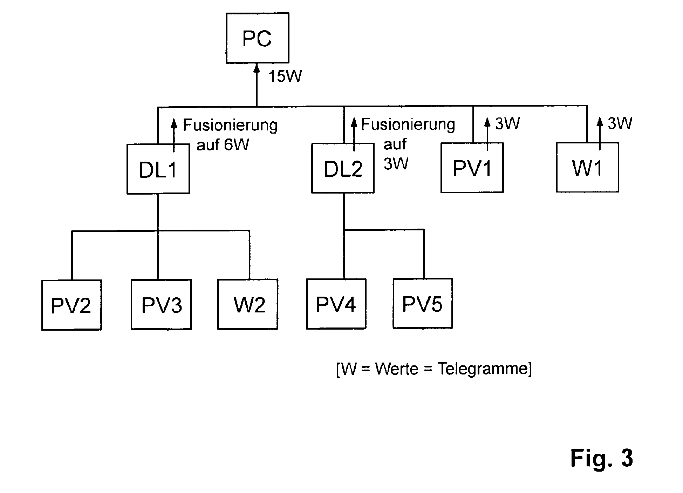

1. Alle über den Schlüssel selektierten Geräte generieren Antworttelegramme. Es werden insgesamt von den Geräten PV-n und W-n 7 x 3 = 21 Telegramme versendet (Figur 2). Die Anzahl "3" ergibt sich aus PDC, PAC, Energie(zähler). Die Zahl "7" ergibt sich aus der Anzahl der Geräte insgesamt. Der Inhalt einzelner Telegramme kann hierbei grundsätzlich auch immer zu einem Telegramm zusammengefasst werden.
2. Datenlogger als VKEs fusionieren, d.h. Werte mit gleichem Selektions- oder Abfrageschlüssel werden zusammengefasst. Hierbei besitzt jede VKE bzw. jeder PV oder W als Wechsel- oder Umrichter eine Speichereinheit SE (Fig. 3).

Somit treffen bei "PC" von den ursprünglich 21 nur noch 5x3 = 15 Telegramme ein. Die Zahl 5 ergibt sich aus W1, PV1, DL2 und DL1, wobei DL1 die fusionierten Daten von PV2 und PV3 sowie von W2 weitergibt. Erfindungsgemäß werden PV und W von DL1 nicht zusammengefasst, um den Wert der Information nicht durch Zusammenfassung inhaltlich ungleicher Quellen zu verringern. Der Datenlogger (DL1) erkennt dies deshalb, weil jeder Wert, der dem Datenlogger zugeht, auch Angaben über die Geräteklasse W oder PV beinhaltet.

Die Fusionierung erzeugt aus den Einzelwerten folgende Informationen:
- P-DC fusioniert liefert Minimum, Maximum, Mittelwert und Gewicht (Anz. der Geräte)
- P-AC fusioniert liefert Minimum, Maximum, Mittelwert und Gewicht (Anz. der Geräte)
- Energiezähler fusioniert liefert Minimum, Maximum, Summe und Gewicht (Anz. der Geräte)

Das Visualisierungsgerät "PC" fusioniert seinerseits auch und reduziert die empfangenen 12 Telegramme auf 6, da die Schlüssel der jeweils drei Messwerte von allen PV Geräten gleich sind und von allen W-Geräten gleich sind.

### Beispiel 2:

Das Visualisierungsgerät (PC = VKE) möchte aus der Anlage alle Werte von PV-Geräten aus der Gruppe "DC-Seite" (b=3) abfragen, mit der Wichtigkeit 1 und 2.

Es wird also wie folgt ein Abfrageschlüssel generiert:
- Gerät vom Typ PV (d)
- Index von 1..12 (c) (beliebig gewählter "offener Schlüssel", mindestens 1-4 (c))
- Gruppe (b) nur DC-Seite
- High-Level Werte UND mittelpriore Werte (a)

### Abfrageschlüssel

| a | | b | | c | | d | |
|---|---|---|---|---|---|---|---|
| von | bis | von | bis | von | bis | von | bis |
| 1 | 2 | 3 | 3 | 1 | 12 | 1 | 1 |

In diesem Fall werden
- P-DC
- U-DC
- I-DC
- U-DC-Max
von PV-Geräten geliefert, da in der Gruppe (b) DC-Seite nur die ersten vier Messwerte existieren (laufende Nummer c nur von 1..4 belegt).

Im System befinden sich nur WK, PV und W als Geräteklassen.

WK: fühlt sich durch den Subschlüssel (d) nicht angesprochen und antwortet nicht.

PV : alle PV (1..5) fühlen sich durch den Subschlüssel (d) angesprochen
- hat die Werte P-DC, U-DC, I-DC und U-DC-Max mit Wichtigkeit (a) =2 vorliegen.

W : fühlt sich durch den (d) Subschlüssel nicht angesprochen und antwortet nicht.

Alle PV Geräte antworten mit jeweils vier Antworttelegrammen (je eins für P-DC, U-DC, I-DC und U-DC-Max) auf die Anfrage. Jedes Antworttelegramm beinhaltet neben dem jeweiligen Messwert unter anderem auch den zugehörigen eindeutigen Schlüssel und die Geräteadresse.

### Fusionierungsvorgang:

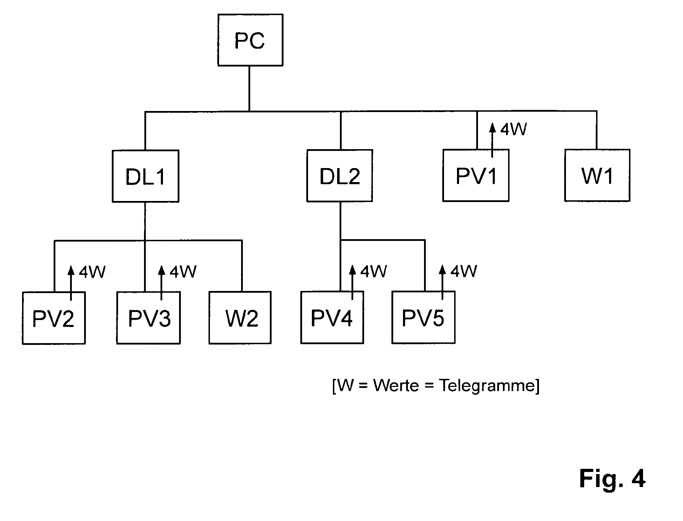

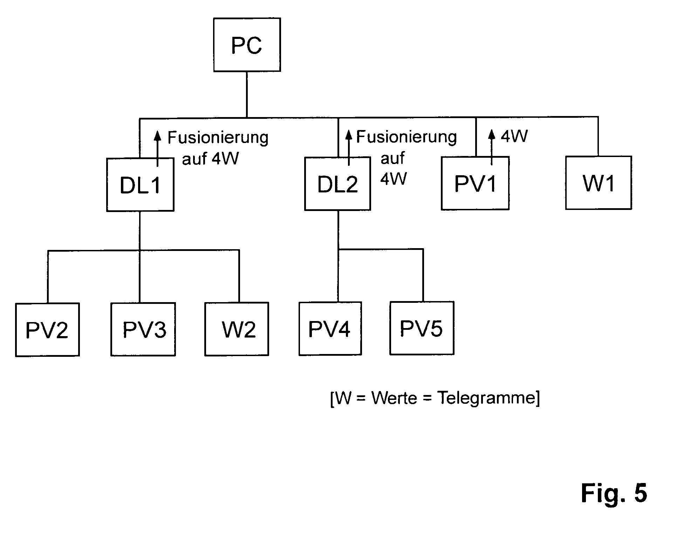

1. Alle über den Schlüssel selektierten Geräte generieren Antworttelegramme. Es werden insgesamt von allen PV-Geräten 5 x 4 = 20 Telegramme versendet (Fig. 4).
2. Datenlogger fusionieren, d.h. Werte mit gleichem Schlüssel werden zusammengefasst (Fig. 5).

Somit treffen bei "PC" von den ursprünglich 20 nur noch 12 Telegramme ein.

Die Fusionierung erzeugt aus den Einzelwerten folgende Informationen:
- P-DC fusioniert liefert Minimum, Maximum, Mittelwert und Gewicht (Anz. der Geräte)
- U-DC fusioniert liefert Minimum, Maximum, Mittelwert und Gewicht (Anz. der Geräte)
- I-DC fusioniert liefert Minimum, Maximum, Mittelwert und Gewicht (Anz. der Geräte)
- U-DC-Max fusioniert liefert Minimum, Maximum, Mittelwert und Gewicht (Anz. der Geräte)

Das Visualisierungsgerät "PC" fusioniert seinerseits auch und reduziert die empfangenen 12 Telegramme auf vier, da die Schlüssel der vier Messwerte von allen Geräten gleich sind.

Die folgenden Beispiele 3 und 4 sollen das Fusionierungsprinzip mit einem teiloffenen Schlüssel erklären. Die Datenzusammenstellung mit einem teiloffenen Schlüssel stellt sich als ressourcenschonend in Bezug auf die Speichereinheiten (SE) dar. Den Vorteil einer SE-ressourcenschonenden Datenzusammenstellung wird hierbei durch eine weniger wirksame Filterwirkung erkauft. Diese reduzierte Filterwirkung kann aber durch eine geschickte Anordnung der Messwerte und Parameter innerhalb des Ordnungsschemas ausgeglichen werden, in dem das Ordnungsschema so aufgebaut wird, dass die am häufigsten zu erwartenden Datenabfragen mit den hier teilweise offenen Schlüsseln das gleiche Ergebnis erbringen wie die Verwendung mit disjunkten Subschlüsseln.

Grundlegende Regeln bei der Verwendung teiloffener Schlüssel mit den Subschlüsseln a bis d sind:
Regel 1: Es kann nur ein Subschlüssel mit einem eingrenzenden "von" - "bis" Bereich belegt werden;
Regel 2: die niederwertigen Subschlüssel (a > b > c > d) müssen dann vollkommen offen gehalten werden; die höherwertigen Subschlüssel dürfen keinen Bereich festlegen.

### Beispiel 3:

### Messwerttabelle:

Prinzipieller Aufbau der Messwertein PV-Geräten für die Schlüssel (b) und (c):
- Leere Felder bedeuten, dass der Messwert auf dem Gerät nicht vorhanden ist.
- **: Wichtigkeit 1, *: Wichtigkeit 2, ohne *: Wichtigkeit 3

| b→ | 1 | 2 | 3 | 4 | 5 | 6 | 7 | 8 | 9 | 10 | 11 |
|---|---|---|---|---|---|---|---|---|---|---|---|
| c↓ | Stat | Dev | DC | Grid | Met. | GG | TP | Stor | Gen | Batt | Lim |
| 1 | Health ** | R_{Iso} | P_{DC} * | Energie ** | | | | | | | |
| 2 | Event ** | h_{Gesamt} | U_{DC} * | P_{AC} ** | | | | | | | |
| 3 | | h_{Grid} | I_{DC} * | U_{AC} | | | | | | | |
| 4 | | Temp | U_{DCmax} * | I_{AC} | | | | | | | |
| 5 | | t_{Fan} | | Freq | | | | | | | |
| | | | | Q_{AC} | | | | | | | |

Prinzipieller Aufbau der Messwerte in W-Geräten für die Schlüssel (b) und (c):

| b→ | 1 | 2 | 3 | 4 | 5 | 6 | 7 | 8 | 9 | 10 | 11 |
|---|---|---|---|---|---|---|---|---|---|---|---|
| c↓ | Stat | Dev | DC | Grid | Met. | GG | TP | Stor | Gen | Batt | Lim |
| 1 | Health ** | | P_{DC} * | Energie ** | | | | | | | |
| 2 | Event ** | h_{Gesamt} | U_{DC} * | P_{AC} ** | | | | | | | |
| 3 | | h_{Grid} | I_{DC} * | U_{AC} | | | | | | | |
| 4 | | Temp | U_{DCmax} * | I_{AC} | | | | | | | |
| 5 | | | | Freq | | | | | | | |

Das Visualisierungsgerät (PC) möchte aus der Anlage mit einer Topologie gemäß Figur 1 nur
- P-DC
- P-AC
- Energiezähler
von allen verfügbaren Geräten geliefert bekommen ("von allen" ist die Konvention für Regel 2).

Es wird also wie folgt ein Abfrageschlüssel generiert:
- Gerät als offener Schlüssel (d = 0 bis 255, also alle)
- Index von 1..4 (c, genügt Regel 1)
- Gruppe (b) AC-Seite ("von" / "bis" ist identisch, damit eindeutig festgelegt, genügt Regel 1)
- Nur High-Level Werte (a, "von" / "bis" ist identisch, damit eindeutig festgelegt, genügt Regel 1)

Das heißt, die Hierarchie zu dem nachfolgend aufgestellten Abfrageschlüssel ist nach links aufsteigend ausgebildet.

### Abfrageschlüssel

| a | | b | | c | | d | |
|---|---|---|---|---|---|---|---|
| Von | Bis | von | bis | von | bis | von | bis |
| 1 | 1 | 4 | 4 | 1 | 4 | 0 | 255 |

Im System befinden sich nur DL, PV und W als Geräteklassen.
DL : fühlt sich durch den (d) Subschlüssel angesprochen und antwortet, hat aber keine Werte, die den höherwertigen Schlüsseln a bis c entsprechen.
- PV :: alle PV (1..5) fühlen sich durch den (d) Subschlüssel angesprochen
- haben die Werte P-AC und Energiezähler mit Wichtigkeit (a) =1 vorliegen;
- W :: alle W (1 und 2) fühlen sich durch den (d) Subschlüssel angesprochen
- haben die Werte P-AC und Energiezähler mit Wichtigkeit (a) =1 vorliegen.

Weitere Gerätetypen sind in diesem System nicht vorhanden und können dem zu Folge auch keine Antwort generieren. Wenn welche da wären, würden sie sich durch den offenen Subschlüssel der Geräteklasse (d) angesprochen fühlen.

Alle PV und W Geräte antworten mit jeweils zwei Antworttelegrammen (je eins für P-AC und Energiezähler) auf die Anfrage. Jedes Antworttelegramm beinhaltet neben dem jeweiligen Messwert unter anderem auch den zugehörigen eindeutigen Schlüssel und die Geräteadresse, mithin auch die Geräteklasse PV oder W, was die Klassifizierung bei der Fusionierung ermöglicht.

Alle über den Schlüssel selektierten Geräte generieren Antworttelegramme. Es werden insgesamt von den Geräten PV-n und W-n 7 x 2 = 14 Telegramme versendet. Das Prinzip ist in Figur 2 dargestellt; im Beispiel 3 sind es allerdings nicht drei Werte, sondern lediglich zwei Werte (PAC und Energie).

Die Datenlogger fusionieren, d.h. Werte mit gleichem Schlüssel werden zusammengefasst. Der Anfrageschlüssel hat zwar den Subschlüssel Geräteklasse geöffnet, die Antworten enthalten aber einen eindeutigen Schlüssel. Nur Werte mit identischem Schlüssel werden zusammengefasst, was zur Folge hat, dass Werte von PV und W nicht zusammengefasst werden, weil - wie bereits dargelegt - die Werte durch die jeweilige Geräteklasse PV oder W gekennzeichnet sind. Für die Fusionierung wird verwiesen auf Figur 2 und Figur 3.

Somit treffen bei der VKE (PC) von den ursprünglich 14 nur noch 10 Telegramme ein.

Die Fusionierung erzeugt aus den Einzelwerten folgende Informationen:
- P-AC fusioniert liefert Minimum, Maximum, Mittelwert und Gewicht (Anz. der Geräte)
- Energiezähler fusioniert liefert Minimum, Maximum, Summe und Gewicht (Anz. der Geräte)

Das Visualisierungsgerät "VKE" (z. B. im PC) fusioniert seinerseits auch und reduziert die empfangenen 10 Telegramme auf 4, da die Schlüssel der jeweils zwei Messwerte von allen PV Geräten gleich sind und von allen W-Geräten gleich sind.

### Beispiel 4: (siehe Tabellen Seiten 25 und 26)

Das Visualisierungsgerät VKE (PC) soll aus der Anlage alle Werte von allen Geräten aus den Gruppe "DC-Seite" (b=3) und "AC-Seite" (b=4) abfragen, mit der Wichtigkeit 2.

Es wird also wie folgt ein Abfrageschlüssel generiert:
- alle Geräte (d = 0..255)
- alle Indice (c=0..255)
- Gruppe: nur AC- und DC-Seite (b=3 bis 4)
- Mittel-wichtige Werte (a = 2)

### Abfrageschlüssel

| a | | b | | c | | d | |
|---|---|---|---|---|---|---|---|
| von | Bis | von | bis | Von | bis | von | bis |
| 2 | 2 | 3 | 4 | 0 | 255 | 0 | 255 |

In diesem Fall werden nur
- P-DC
- U-DC
- I-DC
- U-DC-Max
von allen Geräten geliefert, da in der Gruppe (b) DC-Seite nur die ersten vier Messwerte mit Wichtigkeit 2 existieren (laufende Nummer c nur von 1..4 belegt). In der Gruppe AC gibt es bei keinem der vorhandenen Geräte Werte mit Wichtigkeit 2.

Im System befinden sich nur DL, PV und W als Geräteklassen.

DL : fühlt sich durch den (d) Subschlüssel zwar angesprochen, hat aber selbst keine Werte, die den höherwertigen Subschlüsseln a bis c entsprechen und antwortet nicht mit eigenen Daten
- PV :: alle PV (1..5) fühlen sich durch den Subschlüssel (d) angesprochen - haben die Werte P-DC, U-DC, I-DC und U-DC-Max mit Wichtigkeit (a) =2 vorliegen.
- W :: alle W fühlen sich durch den Subschlüssel (d) angesprochen - haben die Werte P-DC, U-DC, I-DC und U-DC-Max mit Wichtigkeit (a) =2 vorliegen.

Alle PV- und W- Geräte antworten mit jeweils vier Antworttelegrammen (je eins für P-DC, U-DC, I-DC und U-DC-Max) auf die Anfrage. Jedes Antworttelegramm beinhaltet neben dem jeweiligen Messwert unter anderem auch den zugehörigen eindeutigen Schlüssel und die Geräteadresse, um nur solche Werte von Geräten gleicher Geräteklassen zu fusionieren.

### Fusionierungsvorgang:

1. Alle über den Schlüssel selektierten Geräte generieren Antworttelegramme. Es werden insgesamt von allen PV-Geräten 7 x 4 = 28 Telegramme versendet. Für das Fusionierungsprinzip wird auf Figur 2 und Figur 3 verwiesen.
2. Die Datenlogger fusionieren Werte und Parameter, d.h. Werte mit gleichem Schlüssel werden zusammengefasst

Somit treffen bei "PC" von den ursprünglich 28 nur noch 16 Telegramme ein. Da Fusionierungsprinzip ergibt sich aus Figur 2 und Figur 3.

Die Fusionierung erzeugt aus den Einzelwerten folgende Informationen:
- P-DC fusioniert liefert Minimum, Maximum, Mittelwert und Gewicht (Anz. der Geräte)
- U-DC fusioniert liefert Minimum, Maximum, Mittelwert und Gewicht (Anz. der Geräte)
- I-DC fusioniert liefert Minimum, Maximum, Mittelwert und Gewicht (Anz. der Geräte)
- U-DC-Max fusioniert liefert Minimum, Maximum, Mittelwert und Gewicht (Anz. der Geräte)

Das Visualisierungsgerät VKE (PC) fusioniert seinerseits auch und reduziert die empfangenen 16 Telegramme auf acht, da die Schlüssel der vier Messwerte sich nur in der Geräteklasse (d) W und PV unterscheiden.

## Patentansprüche

1. Energieerzeugungsanlage mit mehreren Stromgeneratoren, z. B. PV- und/oder Windkraftanlagen, umfassend mehrere Umrichter (UR), wobei jeder Umrichter oder damit datentechnisch in Verbindung stehende Geräte eine Speichereinheit (SE) aufweist, wobei die Speichereinheit (SE) einerseits Messwerte die Leistung des Generators betreffend und/oder andererseits Zustandswerte sowohl über den Zustand des Umrichters und/oder über den Zustand des Generators und/oder Parameter, die die Funktionsweise des Gerätes festlegen erfasst, wobei diese Werte und Parameter nach einem bestimmten Ordnungsschema in der Speichereinheit hinterlegt sind, wobei die Mehrzahl an Umrichtern oder die damit in Verbindung stehenden Geräte mit mindestens einer Verarbeitungs- und Kommunikationseinheit (VKE) in Verbindung stehen, wobei die VKE als Rechnereinheit ausgebildet ist, wobei in die VKE ein Schlüsselcode direkt oder indirekt eingebbar oder fest hinterlegt ist, der mit dem Ordnungsschema in der SE korreliert, und der das Auslesen der Werte und Parameter aus der SE und die Anzeige der Werte und Parameter in der VKE bewirkt, wobei der Schlüsselcode ein oder mehrere Selektions- oder Subschlüssel (a, b, c, oder d) aufweist, durch die auf die in dem jeweiligen Umrichter oder Geräte hinterlegten Werte und Parameter zurückgegriffen wird.

2. Energieerzeugungsanlage nach Anspruch 1,
**dadurch gekennzeichnet,**
**dass** der Schlüsselcode ein oder mehrere Stellen aufweist, wobei die ein oder mehreren Stellen des Schlüsselcodes durch ein oder mehrere Selektions- oder Subschlüssel belegt sind

3. Energieerzeugungsanlage nach einem der voranstehenden Ansprüche,
**dadurch gekennzeichnet,**
**dass** mindestens zwei Selektions- oder Subschlüssel Teil des Schlüsselcodes sind .

4. Energieerzeugungsanlage nach einem der voranstehenden Ansprüche,
**dadurch gekennzeichnet,**
**dass** der Schlüsselcode vier Selektions- oder Subschlüssel aufweist.

5. Energieerzeugungsanlage nach einem der voranstehenden Ansprüche,
**dadurch gekennzeichnet,**
**dass** ein oder mehrere Stellen (a, b, c, d) des Schlüsselcodes mit einem teiloffenen oder offenen Schlüssel belegt werden.

6. Energieerzeugungsanlage nach einem der voranstehenden Ansprüche ,
**dadurch gekennzeichnet,**
**dass** die mehreren VKEs untereinander verbunden sind.

7. Energieerzeugungsanlage nach einem der voranstehenden Ansprüche ,
**dadurch gekennzeichnet,**
**dass** die mehreren VKEs kaskadiert miteinander in Verbindung stehen.

8. Energieerzeugungsanlage nach einem der voranstehenden Ansprüche ,
**dadurch gekennzeichnet,**
**dass** die mehreren UR zu Gruppen zusammengefasst sind, wobei jeder Gruppe auf einer ersten Kaskade eine VKE zugeordnet ist, wobei die VKEs mehrerer Gruppen in mindestens einer nächsten Kaskade mit mindestens einem übergeordneten VKE in Verbindung stehen.

9. Energieerzeugungsanlage nach einem der voranstehenden Ansprüche,
**dadurch gekennzeichnet,**
**dass** durch die VKEs in einer jeden Kaskade die Messwerte oder Parameter entsprechend dem Selektionsschlüssel zusammengefasst werden und durch vorgegebene Algorithmen, z. B. Mittelwertbildung oder Summation, in dem VKE zu Anzeigewerte verarbeitet werden, die auf dem VKE der höchsten Kaskade angezeigt werden.

10. Energieerzeugungsanlage nach Anspruch 8,
**dadurch gekennzeichnet,**
**dass** vor einer Zusammenfassung der Messwerte oder Parameter eine Normierung der Werte oder Parameter stattfindet.

11. Energieerzeugungsanlage nach einem der voranstehenden Ansprüche ,
**dadurch gekennzeichnet,**
**dass** die UR als DC/AC- oder DC/DC-Wandler ausgebildet sind.

12. Energieerzeugungsanlage nach einem der voranstehenden Ansprüche ,
**dadurch gekennzeichnet,**
**dass** die VKE zumindest der unteren Kaskaden Datenlogger sind.

13. Verarbeitungs- und Kommunikationseinheit (VKE) als Bestandteil einer Energieerzeugungsanlage gemäß einem der Ansprüche 1 bis 11, umfassend eine Rechnereinheit mit einer Eingabeeinheit zur direkten oder indirekten Eingabe eines Schlüsselcodes und einer Anzeigeeinheit zur Anzeige von Daten.

14. Verarbeitungs- und Kommunikationseinheit (VKE) nach Anspruch 12,
**dadurch gekennzeichnet,**
**dass** die VKE eine Ausgabeeinheit zur Übermittlung von Daten an die Speichereinheit aufweist.
